# EUROPÄISCHE PATENTSCHRIFT

(11) **EP 3 174 688 B1**
(45) Veröffentlichungstag und Bekanntmachung des Hinweises auf die Patenterteilung: **12.06.2019**
(21) Anmeldenummer: 15735916.7
(22) Anmeldetag: 03.07.2015
(51) Int. Cl.: B29C 65/10

(54) **HEISSLUFTSIEGELEINRICHTUNG UND VERFAHREN ZUM HEISSLUFTSIEGELN VON KUNSTSTOFFHALTIGER VERPACKUNG**
HOT-AIR SEALING DEVICE AND METHOD FOR HOT-AIR SEALING PLASTIC-CONTAINING PACKAGING
DISPOSITIF DE SCELLEMENT À L'AIR CHAUD ET PROCÉDÉ DE SCELLEMENT À L'AIR CHAUD D'UN EMBALLAGE CONTENANT UNE MATIÈRE PLASTIQUE

(30) Priorität: 24.07.2014 DE 102014214593
(43) Veröffentlichungstag der Anmeldung: 07.06.2017
(73) Patentinhaber: Windmöller & Hölscher KG, 49525 Lengerich (DE)
(72) Erfinder: LAMKEMEYER, Andreas, 49186 Bad Iburg (DE); LAKEMEIER, Christoph, 48429 Rheine (DE); ROTERS, Jörg, 49525 Lengerich (DE)
(86) Internationale Anmeldenummer: PCT/EP2015/065215
(87) Internationale Veröffentlichungsnummer: WO 2016/012218

(56) Entgegenhaltungen:
- EP-A1- 0 436 085
- EP-A1- 1 923 202
- EP-A2- 0 953 429
- DE-A1- 10 104 002
- KR-B1- 100 612 105
- US-A1- 2002 084 028

## Beschreibung

Die Erfindung betrifft eine Heißluftsiegeleinrichtung zum Heißluftsiegeln von kunststoffhaltiger Verpackung nach dem Oberbegriff des Anspruchs 1 und ein Verfahren zum Heißluftsiegeln von kunststoffhaltiger Verpackung nach dem Oberbegriff des Anspruchs 6.

Heißluftsiegeleinrichtungen zum Heißluftsiegeln kunststoffhaltiger Verpackungen sind seit längerem gekannt. Das Patent DE 195 02 255 C2 offenbart eine Station in einer Einrichtung zum Herstellen von Säcken aus Kunststoff. In einer solchen Station wird ein Kunststoffabschnitt an die Siegelstelle herangeführt und in einem Walzenspalt auf ein Ende eines mit einem aufgezogenen oder mit einem nach dem Aufziehen bereits wieder zugelegten Boden versehenen Schlauchstücks aufgebracht. Zur dauerhaften Verbindung von Kunststoffabschnitt und Boden wird in den Walzenspalt Heißluft eingeblasen, welche den einander zugewandten Oberflächen dieser beiden Werkstücke Hitze zuführt. Dadurch werden diese Oberflächen angeschmolzen. Das unmittelbar folgende Verpressen dieser beiden Werkstücke führt zu einer Verbindung der angeschmolzenen Materialien, so dass nach einer Auskühlzeit die gewünschte Verbindung entstanden ist.

Umfasst der Kunststoff wie in der Offenbarung der DE 195 02 255 C2 ein mit einem Polyolefin beschichtetes Gewebe aus gereckten Polyolefin-, insbesondere aus gereckten Polypropylen-Fäden, so ist es wichtig, diese Fäden nicht zu stark zu erwärmen, um nicht die durch das Recken entstandene Festigkeit zu verlieren. Es ist daher erforderlich, möglichst zuverlässig nur die Beschichtung zu erhitzen. Andererseits ist es für eine sehr feste Verbindung der Werkstücke erforderlich, dass in die Beschichtung eine hohe Wärmemenge eingetragen wird.

Will man in einer solchen Heißluftsiegelstation den Durchsatz erhöhen, so ist es erforderlich, die Durchlaufgeschwindigkeit der Werkstücke und die Wärmeübertragungsrate zu erhöhen. Für die Übertragung einer größeren Wärmemenge pro Zeiteinheit sind im Wesentlichen zwei Parameter beeinflussbar: zum einen kann die Einwirkzeit verlängert werden, zum anderen kann die Temperatur der Heißluft erhöht werden. Eine Verlängerung der Einwirkzeit ist jedoch nachteilig, da dann auch das Gewebe erhitzt wird, was zu vermeiden ist. Es bleibt also, die Temperatur der Heißluft zu erhöhen.
In einer bekannten Heißluftsiegelstation wird in der Regel ein erster Lufterhitzer verwendet, dem über eine Eintrittsöffnung ein Eintrittsluftstrom mit einer Eintrittstemperatur zugeführt wird. Diese Eintrittstemperatur entspricht im Wesentlichen der Umgebungstemperatur, die der Raumtemperatur entspricht oder gegenüber dieser leicht erhöht ist, da in der Nähe einer Heißluftsiegelstation Wärme in die Umgebung abgegeben wird. Dieser Eintrittsluftstrom wird innerhalb des Lufterhitzers durch eine Wärmequelle erhitzt. Als Wärmequelle dient oft ein elektrisch betriebenes Heizelement. Der so erhitzte Luftstrom gelangt nun zur Austrittsöffnung. Dieser Austrittsluftstrom, der nun eine Austrittstemperatur aufweist, wird in Richtung auf die zu versiegelnden Bestandteile des Verpackungsmaterials geleitet.

Die EP 0 436 085 A1 offenbart eine Luftheizvorrichtung, die zum Verschweißen von Kunststoffmaterialien vorgesehen ist. Dabei wird der Luftstrom, der an dem Kunststoffmaterial vorbei geführt wird, nicht der Umgebung zugeleitet, sondern wieder in den Aufheizbereich geleitet. Damit geht die erzeugte Wärme nicht verloren, wenn sie nicht benötigt wird, sondern wird erneut genutzt. Damit ist die Eintrittstemperatur in der Regel gegenüber der Umgebungstemperatur erhöht.

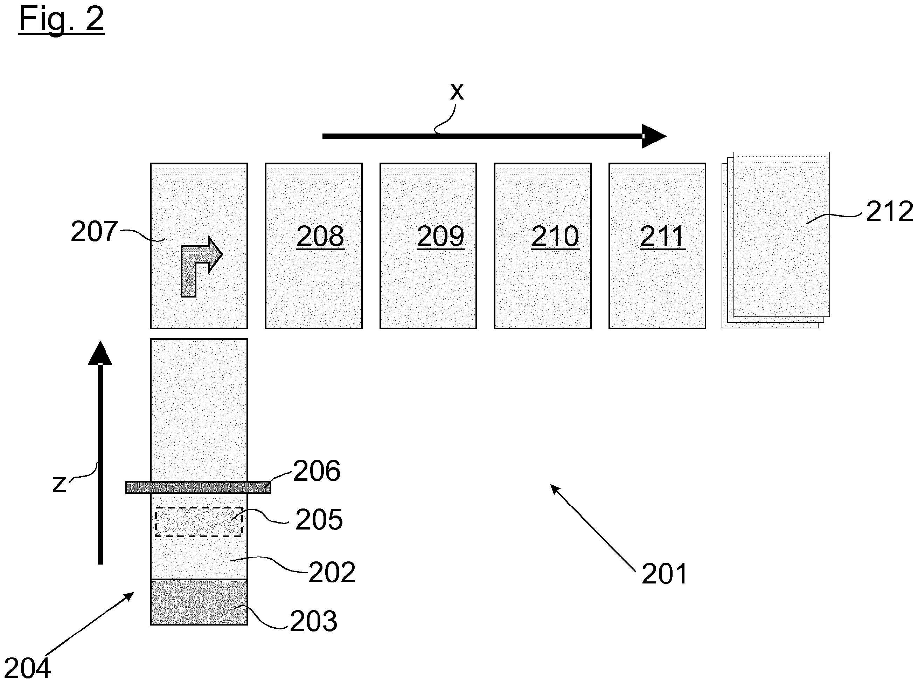

Die EP 1 923 202 A1 offenbart ebenfalls eine Luftheizvorrichtung, die zum Verschweißen von Kunststoffmaterialien vorgesehen ist. Die Figur 2 zeigt dabei eine einzige Kammer, die dem Erwärmen von Luft dient. In dieser Kammer sind mehrere Heizelemente vorgesehen, mit welchen die Temperatur der Luft stark erhöht werden kann.

Als nachteilig erweist sich, dass sich in bekannten Heißluftsiegelstationen der Durchsatz nicht weiter erhöhen lässt.

Die Aufgabe der vorliegenden Erfindung ist es daher, eine Heißluftsiegelstation und ein Verfahren vorzuschlagen, mit denen sich der Durchsatz erhöhen lässt.

Erfindungsgemäß wird diese Aufgabe durch eine Heißluftsiegelstation nach dem Anspruch 1 und durch ein Verfahren nach dem Anspruch 6 gelöst. In den abhängigen Ansprüchen sind mögliche Ausgestaltungen der Erfindung angegeben.

Gemäß der vorliegenden Erfindung ist vorgesehen, dass der Eintrittsluftstrom eine Eintrittstemperatur aufweist, die zwischen der Umgebungstemperatur und der Temperatur liegt, mit der die Eintrittsöffnung maximal belastbar ist. Jeder der in einer solchen Heißluftsiegelstation verwendeten Lufterhitzer hat bestimmte technische Spezifikationen, in denen unter anderem auch festgelegt ist, welche Temperatur der Eintrittsluftstrom aufweisen darf. Mit der Temperatur, mit der die Eintrittsöffnung maximal belastbar ist, ist also die Temperatur gemeint, die in der technischen Spezifikation des Lufterhitzers festgelegt ist.

Wird nun ein Eintrittsluftstrom verwendet, dessen Temperatur deutlich oberhalb der Umgebungstemperatur, jedoch noch unterhalb der maximal möglichen Eintrittstemperatur liegt, so kann dieser Luftstrom mittels der Wärmequelle auf eine höhere Temperatur gebracht werden als der Luftstrom, dessen Eintrittstemperatur der Umgebungstemperatur entspricht, wenn die Wärmeübertragungsrate der Wärmequelle konstant bleibt. Hiervon ist jedoch in der Regel auszugehen, da eine solche Wärmequelle in der Regel mit maximaler Leistung betrieben wird. Durch die Erhöhung der Eintrittstemperatur kann also gleichzeitig die Austrittstemperatur bei Verwendung desselben Lufterhitzers erhöht werden. Damit kann die Wärmeübertragungsrate auf das Verpackungsmaterial erhöht werden, so dass dementsprechend auch die Durchlaufgeschwindigkeit und damit der Durchsatz gesteigert werden können.

Erfindungsgemäß ist wenigstens ein zweiter Lufterhitzer vorgesehen, dessen Austrittsluftstrom den Eintrittsluftstrom des ersten Lufterhitzers darstellt. Es ist also vorgesehen, zwei Lufterhitzer in Reihe zu schalten. Durch die Verwendung eines zweiten Lufterhitzers ist der Eintrittsluftstrom des ersten Lufterhitzers auf einfache Weise beeinflussbar, denn die Temperatur des Austrittsluftstroms ist durch die Beeinflussung der Energiezufuhr der Wärmequelle auf einfache Weise steuerbar. So ist es beispielsweise möglich, die Austrittstemperatur des zweiten Lufterhitzers auf eine Austrittstemperatur im Bereich von 200 °C bis 350 °C einzustellen. Die Eintrittstemperatur des Eintrittsluftstroms des zweiten Lufterhitzers kann dabei der Umgebungstemperatur entsprechen.

In einer vorteilhaften Weiterbildung der Erfindung ist vorgesehen, dass zwischen dem zweiten Lufterhitzer und dem ersten Lufterhitzer ein Verbindungsstück angeordnet ist, welches die Austrittsöffnung des zweiten Lufterhitzers mit der Eintrittsöffnung des ersten Lufterhitzers verbindet. Der Luftstrom ist damit vollständig und weitgehend verlustfrei zwischen dem zweiten und dem ersten Lufterhitzer führbar. Als Verbindungsstück kann beispielsweise ein festes Rohrstück oder ein flexibles Schlauchstück vorgesehen werden. Wie das Verbindungsstück auszugestalten ist, hängt insbesondere auch vom Einbauort des zweiten Lufterhitzers ab, denn etwa bei beengten Platzverhältnissen können beide Lufterhitzer nicht linear angeordnet sein. Das Verbindungsstück umfasst vorteilhafterweise ein isolierendes Material, so dass von der Wärme, die der zweite Austrittsluftstrom transportiert, möglich wenig verloren geht.

Gemäß der Erfindung ist weiterhin zwischen dem zweiten Lufterhitzer und dem ersten Lufterhitzer wenigstens eine Temperaturmesseinrichtung vorgesehen.

Auf diese Weise wird die Eintrittstemperatur des ersten Lufterhitzers auf einfache Weise kontrolliert, und bei Abweichungen von der gewünschten Temperatur werden entsprechende Maßnahmen ergriffen. Sollte also die Eintrittstemperatur des ersten Lufterhitzers von der Solltemperatur abweichen, so kann die Heizleistung der Wärmequelle des zweiten Lufterhitzers angepasst werden.

Weiterhin ist eine Steuereinrichtung vorgesehen, welcher die Messwerte der Temperaturmesseinrichtung zuleitbar sind und welche den zweiten Lufterhitzer derart ansteuert, dass der Austrittsluftstrom im Wesentlichen eine gewünschte Temperatur aufweist. Die Ansteuerung des zweiten Lufterhitzers erfolgt dabei vorzugsweise durch die Beeinflussung der Leistung der Wärmequelle. Ist der zweite Lufterhitzer also mit einer elektrisch betriebenen Wärmequelle ausgestattet, so kann vorgesehen sein, dessen elektrischen Strom zu steuern. Insgesamt wird also mit der Temperaturmessung und der Beeinflussung der Leistung der Wärmequelle einen Regelkreis geschaffen, mit dem die Austrittstemperatur beispielsweise konstant gehalten werden kann. Allerdings kann auch vorgesehen sein, die Austrittstemperatur periodisch zu ändern, um dem ersten Lufterhitzer einen Eintrittsluftstrom mit einer erhöhten Eintrittstemperatur in den Zeiträumen zur Verfügung zu stellen, in denen der ersten Lufterhitzer den ersten Austrittsluftstrom auf das Verpackungsmaterial leitet. Es kann also vorgesehen sein, die Heizleistung in zweiten Lufterhitzer zu reduzieren, wenn eine erhöhte Wärmemenge nicht benötigt wird.

Gemäß der Erfindung ist darüber hinaus vorgesehen, dass die gewünschte Temperatur im Bereich von 80 bis 100 % der maximal möglichen Temperatur des Eintrittsluftstroms des ersten Lufterhitzers liegt. Bevorzugt ist aus diesem Bereich der Bereich von 90 - 100 %. Ein solcher Wert kann der Steuereinrichtung vorgebbar sein. Die Steuereinrichtung kann dabei als Grundwert die maximal mögliche Eintrittstemperatur des ersten Lufterhitzers gespeichert haben. Ein Bediener kann der Steuereinrichtung nun den relativen Anteil dieser Temperatur mitteilen, so dass die Bedienung der Heißluftsiegelstation einfacher wird. Die gewünschte Temperatur kann alternativ auch von der Steuereinrichtung automatisch in Abhängigkeit von dem aktuellen Durchsatz, also der Durchlaufgeschwindigkeit der Werkstücke, festgelegt werden, wobei ein linearer Zusammenhang zur Bestimmung der gewünschten Temperatur zugrunde gelegt sein kann.

Bevorzugt ist dabei, wenn der erste Eintrittsluftstrom eine Eintrittstemperatur aufweist, welche zwischen 50 °C und 500 °C, insbesondere zwischen 200 und 350 °C liegt. Vor allem der letztgenannte Temperaturbereich liegt nahe an der maximalen Eintrittstemperatur von bekannten Lufterhitzern, so dass letztendlich auf diese Weise der maximal mögliche Durchsatz in der Heißluftsiegelstation erreicht wird.

In einer vorteilhaften Ausführungsform der Erfindung ist zwischen dem zweiten und dem ersten Lufterhitzer zumindest ein Ventil vorgesehen, mit welchem der Austrittsluftstrom des zweiten Lufterhitzers ableitbar ist. Damit wird also verhindert, dass der Austrittsluftstrom des zweiten Lufterhitzers als Eintrittsluftstrom des ersten Lufterhitzers zur Verfügung steht. Dies kann in den Zeiträumen vorgesehen sein, in denen der erste Lufterhitzer selbst keinen Austrittsluftstrom zur Verfügung stellen muss, beispielsweise wenn keine Werkstücke miteinander zu verbinden sind. Dieses Ventil kann über einen Antrieb angesteuert werden, wobei der Antrieb wiederum von der Steuereinrichtung gesteuert werden kann. Dieses Ansteuern kann periodisch erfolgen. Das Ventil kann dabei ein einfaches Schaltventil sein, welches zwischen einer Durchlass- und einer Sperrstellung hin- und her schaltbar ist. Das Vorsehen eines Ventils ist insbesondere dann vorteilhaft, wenn der Eintrittsluftstrom des ersten Lufterhitzers variiert werden soll, aber die Leistung der Wärmequelle des zweiten Lufterhitzers konstant gehalten werden soll.

In einer weiteren vorteilhaften Ausgestaltung der Erfindung kann eine Leiteinrichtung vorgesehen sein, mit welcher der Austrittsluftstrom des zweiten Lufterhitzers dessen Eintrittsöffnung zuleitbar ist. Die Leiteinrichtung bringt insbesondere dann Vorteile mit sich, wenn sie mit einem Ventil zusammenarbeitet.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Heißluftsiegeleinrichtung und jeweils umgekehrt stehen, so dass bezüglich der Offenbarung zu den einzelnen Aspekten der Erfindung stets wechselseitig Bezug genommen wird beziehungsweise werden kann. Die einzelnen Figuren zeigen:
- Fig. 1: Prinzipskizze einer Heißluftsiegelstation mit einem ersten und einem zweiten Lufterhitzer
- Fig. 2: Prinzipskizze einer Vorrichtung zur Herstellung von Säcken, vorzugsweise aus Gewebe

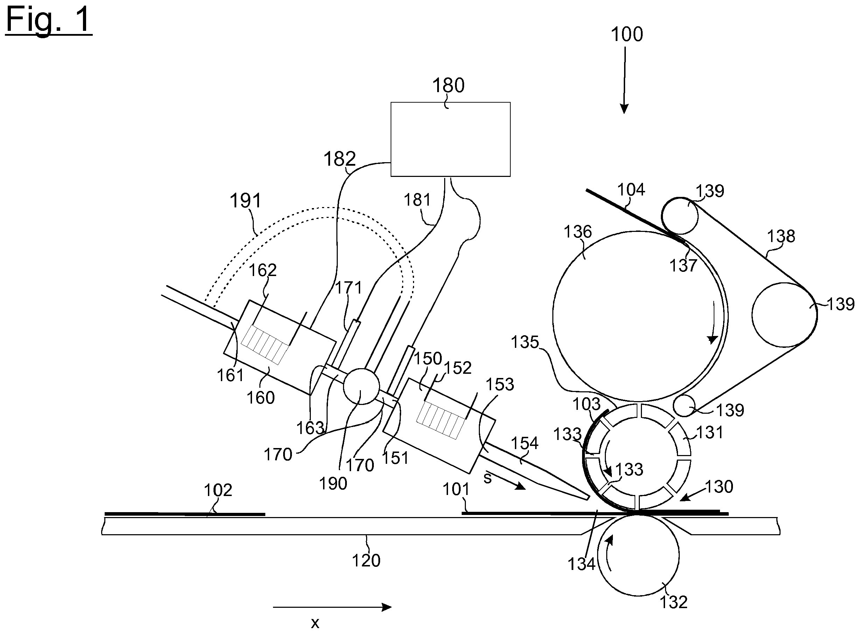

Fig. 1 zeigt eine Heißluftsiegelstation 100, wie sie vorteilhafterweise in einer Maschine zur Herstellung eines kunststoffhaltigen Verpackungsmaterials, welches auch oft als Packmittel bezeichnet wird, Verwendung findet. Ein erstes Werkstück 101, beispielsweise ein Schlauchstück aus einem kunststoffhaltigen Packstoff, wird mittels einer nicht dargestellten Transporteinrichtung oberhalb des Tisches 120 durch die Heißluftsiegelstation transportiert. Sowohl die Transporteinrichtung als auch der Tisch können sich über die Heißluftsiegelstation hinaus und gegebenenfalls über weite Strecken der gesamten Maschine erstrecken. Der Tisch dient insbesondere als Auflagefläche der Bereiche des Werkstücks 101, die in der Heißluftsiegelstation bearbeitet werden sollen. Im Bereich des Walzenspalts 130 ist der Tisch 120 unterbrochen. Der Walzenspalt 130 wird gebildet durch die Transportwalze 131 und der Gegenwalze 132, wobei die gedachte Verbindungslinie der Unterbrechung des Tisches 120 im Wesentlichen tangential zur Oberfläche der Gegenwalze 132 liegt. Die Transportwalze 131 dient der Förderung beziehungsweise dem Transport eines zweiten Werkstücks 103, welches mit dem ersten Werkstück 101 zu verbinden ist.

Die Transportwalze 131 ist mit einer Einrichtung zum Festhalten eines Werkstücks eingerichtet, so dass das Werkstück 103 möglichst vollflächig auf der Umfangsfläche 135 der Transportwalze 131 anliegt. Dazu können beispielsweise mechanische Mittel wie etwa Haltezangen vorgesehen sein oder - wie in der vorliegenden Figur zu erkennen ist - Bohrungen 133, die mit einem Unterdruck beziehungsweise Vakuum beaufschlagbar sind, so dass das Werkstück 103 aufgrund eines Luftdruckunterschiedes auf der Umfangsfläche der Transportwalze 131 gehalten wird. Anstelle von Bohrungen können auch andere Maßnahmen vorgesehen sein, um die Umfangsfläche der Transportwalze 131 mit einem Unterdruck zu beaufschlagen, wie etwa luftdurchlässige Materialien. Im Bereich des Walzenspalts 130 berührt dann das zweite Werkstück 103 das erste Werkstück 101 und wird mit letzterem verpresst. Um eine dauerhafte Verbindung herzustellen, wird zudem Heißluft 134 in den Walzenspalt eingeblasen, um die einander zugewandten, kunststoffhaltigen Oberflächen der Werkstücke anzuschmelzen, so dass durch das unmittelbare Verpressen eine Vermischung der entstandenen Schmelzen erfolgt. Die so erzeugte Verbindung ist dabei so stark, dass das Werkstück 103 sich trotz des Unterdrucks von der Umfangsfläche 135 der Transportwalze 131 löst. Gegebenenfalls kann der Unterdruck auch vermindert oder gar ganz aufgehoben werden.

Dem ersten Werkstück 101 folgt ein weiteres erstes Werkstück 102, dem später das weitere zweite Werkstück 104 zuordnet wird. Dieses wird durch den taktweise drehangetriebenen Schneid- und Förderzylinder 136 dem Transportzylinder 131 zugeführt. Dabei wird das zweite Werkstück 103, 104 von einer Bahn mit einer Trenneinrichtung 137, vorteilhafterweise ein Messer, von dieser abgeschnitten. Das Festhalten des zweiten Werkstücks 103, 104 erfolgt durch ein umlaufendes Förderband, welches über mehrere Umlenkrollen 139 geführt wird und eigenständig angetrieben sein kann.

Der für das Anschmelzen benötigte Strom der Heißluft 134 wird in einem ersten Lufterhitzer 150 erzeugt. Dazu wird dem Lufterhitzer durch die Eintrittsöffnung 151 Luft zugeführt, die innerhalb des ersten Lufterhitzers beispielsweise durch ein Gebläse in einen Volumenstrom überführt wird. Innerhalb des ersten Lufterhitzers 150 ist zudem eine Wärmequelle 152 vorgesehen, die in der Figur 1 als Heizdraht dargestellt ist. Der an der Wärmequelle vorbei geführte Volumenstrom wird stark erhitzt der Austrittsöffnung zugeführt und tritt dann aus der Düse 154 als gerichteter Heißluftstrom aus. Es ist zu betonen, dass Luft in der gesamten vorliegenden Offenbarung als Synonym für ein beliebiges geeignetes Gas angesehen wird. Jedoch ist die normale Umgebungsluft das bevorzugte Prozessgas.

Die Luft, die in den ersten Lufterhitzer 150 gelangt, stammt erfindungsgemäß nicht aus der Umgebung, sondern stammt aus der Austrittsöffnung 163 des zweiten Lufterhitzers 160, dessen grundsätzlicher Aufbau bevorzugt dem des ersten Lufterhitzers 150 entspricht. So gelangt die Luft aus der Umgebung durch die Eintrittsöffnung 161 in den Lufterhitzer, wobei die Luft im Wesentlichen die Umgebungstemperatur hat. In dem Lufterhitzer 160 wird zunächst wiederum ein Luftstrom erzeugt, welcher entlang der Wärmequelle 162 - wiederum als Heizdraht dargestellt - gelangt und welcher anschließend als erhitzter Luftstrom durch die zweite Austrittsöffnung 163 aus dem zweiten Lufterhitzer austritt, wobei dieser Luftstrom nun eine zweite Austrittstemperatur aufweist. Zwischen der zweiten Austrittsöffnung 163 und der ersten Eintrittsöffnung 151 ist ein Rohrstück 170 angeordnet, welches den Luftstrom leitet.

Zwischen beiden Lufterhitzern 150 und 160, vorzugsweise - wie dargestellt - innerhalb des Rohrstücks 170, ist zumindest eine Temperaturmesseinrichtung 171 angeordnet, mit welcher die Austrittstemperatur des Luftstroms, nachdem dieser den ersten Lufterhitzer verlassen hat, messbar ist. Das Ergebnis dieser Messung, die während eines Produktionsprozesses mehrfach, beispielsweise periodisch, wiederholt wird, wird der Steuereinrichtung 180 über die Messleitung 181 zugeleitet. Diese Steuereinrichtung vergleicht diesen Temperaturwert mit einem Solltemperaturwert. Dieser Solltemperaturwert ist abgestimmt auf den maximalen Temperaturwert, den ein Luftstrom aufweisen darf, der die Eintrittsöffnung des Lufterhitzers 150 passiert.

Sollte die gemessene Temperatur außerhalb eines Toleranzbereiches liegen, der beispielsweise +/- 5 % um den Solltemperaturwert umfassen kann, so steuert die Steuereinrichtung die Wärmequelle derart, dass die gemessene Temperatur wieder innerhalb des Toleranzbereichs liegt. Dazu ist die Steuereinrichtung über eine Steuerleitung 182 mit der Wärmequelle 162 verbunden und steuert hierüber den Wärmeeintrag in den Luftstrom. Bevorzugt ist eine elektrisch beschriebene Wärmequelle vorgesehen, bei der die Steuereinrichtung den elektrischen Strom steuert.

Eine Änderung der Wärmeleistung kann in kleinen Schritten erfolgen, beispielsweise in 1-Prozent-Schritten, wobei die Auswirkung der Änderung durch die Auswertung der folgenden Temperaturmessung überprüft wird. Dieses Vorgehen ist vorteilhaft, um nicht zu starke Schwankungen in der Temperatur des Luftstroms hinnehmen zu müssen, die, insbesondere bei zu niedrigen Temperaturen, letztlich zu fehlerbehafteten Verbindungen der Werkstücke führen könnten. Eine langsame Anpassung ist auch tolerierbar, da die maximal mögliche Eingangstemperatur des Lufterhitzers eine technische Spezifikation des Lufterhitzers ist, bei der in der Regel ein Sicherheitsbereich berücksichtigt ist, bevor der Lufterhitzer dauerhaft beschädigt wird. Ein Überschreiten der maximalen Eingangstemperatur für einen gewissen, im Vergleich zur gesamten Betriebszeit dennoch kurzen Zeitraum ist daher hinnehmbar.

Die aufgrund der Temperaturmessung angepasste Heizleistung der Wärmequelle kann von einer weiteren Anpassung auf Basis anderer Effekte überlagert sein. So kann vorgesehen sein, die Heizleistung zu verringern, wenn keine Heißluft benötigt wird. Dies ist insbesondere der Fall, wenn gerade zwei Werkstücke 101, 103 miteinander verbunden wurden und nun ein kurzer Zeitraum gewartet werden muss, bis die folgenden Werkstücke 102, 104 in den Walzenspalt 130 gelangen. Dieser Zeitraum ist durch die Transportgeschwindigkeit und den Abstand der beiden Werkstücke 101 und 102 festgelegt. Dieser ist dem Steuergerät der Gesamtmaschine bekannt und ist der Steuereinrichtung 180 übermittelbar. Die Steuereinrichtung 180 kann selbstverständlich ein Bestandteil des Steuergeräts der Gesamtmaschine sein und würde sich in diesem Fall durch zusätzliche Hard- und Softwarekomponenten auszeichnen.

Auch im Falle des Ausbleibens eines Werkstücks kann die Heizleistung verringert werden. Dieses Ausbleiben kann durch einen Sensor ermittelt werden und/oder es ist dem Steuergerät bekannt, beispielsweise wenn ein Werkstück bereits zuvor - etwa wegen eines Materialfehlers - ausgeschleust wurde.

In dem Rohrstück 170 kann des Weiteren ein steuerbares Ventil 190 vorgesehen sein, das von der Steuereinrichtung 180 oder einem anderen Steuergerät aufgrund von Informationen über den Bedarf von Heißluft angesteuert wird. Wird Heißluft benötigt, so wird das Ventil in eine Durchgangsstellung geschaltet und die Heißluft kann das Rohrstück vollständig durchströmen und die erste Eintrittsöffnung 151 erreichen. Wird hingegen die Heißluft nicht benötigt, so wird das Ventil in eine Sperrstellung geschaltet, in der die Heißluft in die Umgebung abgeführt wird. Der Auslass des Ventils kann auch mit einem Rohr oder Schlauch 191 verbunden sein, mit welchem die heiße Luft wieder der zweiten Eingangsöffnung bereitstellbar ist. Auf diese Weise kann die Heißluft, die nicht benötigt wird, nochmals durch den zweiten Lufterhitzer geführt werden, ohne dass die Wärmequelle mit voller Leistung betrieben werden muss. Es kann also eine Energieeinsparung erreicht werden.

Auch der erste Lufterhitzer 150 kann mit einem gleichartigen Ventil zum gleichen Zweck ausgestattet sein, welches jedoch nicht dargestellt ist. Dieses wäre in der Düse 154 angeordnet. In diesem Fall werden bevorzugt beide Ventile nicht gleichzeitig betätigt, sondern die Schaltung des Ventils 190 eilt der Schaltung des Ventils in der Düse 154 etwas voraus, so dass dem ersten Lufterhitzer 150 bereits die erhitzte Luft aus dem zweiten Lufterhitzer 160 zur Verfügung steht, wenn oder kurz bevor das Ventil in der Düse die Durchgangsstellung einnimmt. Diese Voreilung kann von der Steuereinrichtung 180 angesteuert werden, wobei die Austrittstemperatur des zweiten Lufterhitzers 160 Berücksichtigung finden kann. Das bedeutet, dass bei einer niedrigen Temperatur das Ventil 190 zu einem früheren Zeitpunkt auf die Durchgangsstellung geschaltet werden kann als bei einer höheren Temperatur, die näher an der Temperatur liegt, mit der die Eintrittsöffnung 151 belastbar ist.

Die Figur 2 zeigt nun schematisch eine Gesamtmaschine 201 zur Herstellung einer kunststoffhaltigen Verpackung, insbesondere von Säcken. Eine derartige Verpackung umfasst bevorzugt ein Laminat aus Grundstoffen. Ein solches Laminat kann beispielsweise ein Gewebe sein, auf welches mittels eines verflüssigten Kunststoffs eine Kunststofffolie auflaminiert wurde. Das Gewebe kann aus Bändchen aus gerecktem polyolefinischem Material, vorzugsweise Polypropylen, bestehen. Die Gesamtmaschine 201 ist jedoch nicht auf die Herstellung von Säcken aus Gewebe beschränkt, vielmehr sind alle kunststoffhaltigen Materialien verarbeitbar, die sich durch Heißluftsiegeln verbinden lassen. Hierzu zählen insbesondere auch Vliese und Laminate, die aus einer oder gar mehreren Vliesbahnen hergestellt wurden. Im Folgenden sind daher, auch wenn nur Gewebe erwähnt ist, alle derartigen, kunststoffhaltigen Materialien umfasst.

Zunächst wird der Gewebeschlauch 202 der Gesamtmaschine 201 zugeführt. Dies geschieht vorteilhafterweise durch Abwickeln des einen Wickel 203 bildenden Gewebeschlauches in einer Abwicklungseinrichtung 204. Anschließend kann der Schlauch 202 die so genannte Öffnung in der Öffnungsstation 205 erfahren. Dabei wird der Gewebeschlauch um ein Innenwerkzeug herum geführt, welches die beiden Lagen voneinander trennt, so dass sich die Lagen, falls sie bei einem der Herstellungsschritte des Schlauches miteinander verklebt wurden, trennen. Nur bei getrennten Lagen kann sichergestellt werden, dass die folgenden Produktionsschritte ordnungsgemäß durchgeführt werden können. Im Anschluss werden die voneinander getrennten Materiallagen des Schlauches wieder aufeinander gelegt.

Der Gewebeschlauch wird nun der Querschneideeinrichtung 206 zugeführt, die den Gewebeschlauch in einzelne Schlauchstücke vereinzelt.

Anschließend erfolgt eine Änderung der ursprünglichen Transportrichtung z, in der der Schlauch bzw. die Schlauchstücke in Richtung ihrer Längsachsen transportiert wurden, in die neue Transportrichtung x, so dass die Schlauchstücke nun nicht mehr in Richtung z ihrer Schlauchlängsachse (im Folgenden auch Erstreckungsrichtung der Schlauchstücke genannt), sondern quer hierzu transportiert werden, so dass die Enden der Schlauchstücke zwecks Anformung der Böden seitlich erreichbar sind.

In der folgenden Station, der Bodenöffnungsstation 208, werden beide Enden eines jeden Schlauchstücks geöffnet und die so genannten Bodenrechtecke gelegt. In der darauf folgenden Ventilstation 209 wird auf eines der beiden offenen Enden ein Ventil aufgelegt und befestigt. Die offenen Böden werden nun in der Bodenschließstation 210 geschlossen, wobei zwei Laschen aufeinander gelegt werden und miteinander dauerhaft, beispielsweise durch Verschweißen, verbunden werden. Den Abschluss des eigentlichen Sackherstellprozesses bildet das Aufbringen je eines Bodendeckblattes auf die Böden in der Deckblattstation 211. Dazu können die Deckblätter ebenfalls aufgeschweißt werden. Die fertigen Säcke werden anschließend auf dem Sackstapel 212 abgelegt und von dort auf nicht näher beschriebene Weise abtransportiert.

| **Bezugszeichenliste** | |
|---|---|
| 100 | Heißluftsiegelstation |
| 101 | Werkstück |
| 102 | Werkstück |
| 103 | Werkstück |
| 104 | Werkstück |
| | |
| 120 | Tisch |
| | |
| 130 | Walzenspalt |
| 131 | Transportwalze |
| 132 | Gegenwalze |
| 133 | Bohrungen |
| 134 | Heißluft |
| 135 | Umfangsfläche |
| 136 | Schneid- und Förderzylinder |
| 137 | Trenneinrichtung |
| 139 | Umlenkrolle |
| | |
| 150 | Lufterhitzer |
| 151 | Eintrittsöffnung |
| 152 | Wärmequelle |
| 154 | Düse |
| | |
| 160 | Lufterhitzer |
| 161 | Eintrittsöffnung |
| 162 | Wärmequelle |
| 163 | Austrittsöffnung |
| | |
| 170 | Rohrstück |
| 171 | Temperaturmesseinrichtung |
| 180 | Steuereinrichtung |
| 181 | Messleitung |
| 182 | Steuerleitung |
| | |
| 190 | Ventil |
| 191 | Rohr/Schlauch |
| | |
| 201 | Gesamtmaschine |
| 202 | Gewebeschlauch |
| 203 | Wickel |
| 204 | Abwicklungseinrichtung |
| 205 | Öffnungsstation |
| 206 | Querschneideeinrichtung |
| 209 | Ventilstation |
| 210 | Bodenschließstation |
| 211 | Deckblattstation |
| 212 | Sackstapel |
| | |
| x | neue Transportrichtung |
| z | ursprüngliche Transportrichtung |

## Patentansprüche

1. Heißluftsiegeleinrichtung (100) zum Heißluftsiegeln von kunststoffhaltigem Verpackungsmaterial, mit einem ersten Lufterhitzer (150), dem über eine Eintrittsöffnung (151) ein Eintrittsluftstrom mit einer Eintrittstemperatur zuführbar ist und der eine Austrittsöffnung (163) aufweist, durch die ein Austrittsluftstrom einer Austrittstemperatur in Richtung auf die zu versiegelnden Bestandteile des Verpackungsmaterials gebbar ist,
wobei ein zweiter Lufterhitzer (160) vorgesehen ist, dessen Austrittsluftstrom den Eintrittsluftstrom des ersten Lufterhitzers (150) darstellt, wobei zwischen dem zweiten Lufterhitzer (160) und dem ersten Lufterhitzer (150) wenigstens eine Temperaturmesseinrichtung (171) vorgesehen ist,
**dadurch gekennzeichnet,**
**dass** der Eintrittsluftstrom des ersten Lufterhitzers eine Eintrittstemperatur aufweist, die zwischen der Umgebungstemperatur und der Temperatur liegt, mit der die Eintrittsöffnung maximal belastbar ist,
**dass** eine Steuereinrichtung (180) vorgesehen ist, welcher die Messwerte der Temperaturmesseinrichtung (171) zuleitbar sind und welche den zweiten Lufterhitzer (160) derart ansteuert, dass der Austrittsluftstrom im Wesentlichen eine gewünschte Temperatur aufweist und
**dass** die gewünschte Temperatur im Bereich von 80 bis 100 %, vorzugsweise 90 bis 100 % der maximal möglichen Temperatur des Eintrittsluftstroms des ersten Lufterhitzers (150) liegt, wobei ein solcher Wert der Steuereinrichtung vorgebbar ist.

2. Heißluftsiegeleinrichtung (100) nach Anspruch 1,
**dadurch gekennzeichnet, dass**
der erste Eintrittsluftstrom eine Eintrittstemperatur aufweist, welche zwischen 50 und 500 °C, insbesondere zwischen 200 und 350 °C liegt.

3. Heißluftsiegeleinrichtung (100) nach einem der vorstehenden Ansprüche,
**dadurch gekennzeichnet, dass**
zwischen dem zweiten Lufterhitzer (160) und dem ersten Lufterhitzer (150) ein Verbindungsstück (170) angeordnet ist, welches die Austrittsöffnung des zweiten Lufterhitzers (160) mit der Eintrittsöffnung (151) des ersten Lufterhitzers (150) verbindet.

4. Heißluftsiegeleinrichtung (100) nach einem der vorstehenden Ansprüche,
**dadurch gekennzeichnet, dass**
zwischen dem zweiten Lufterhitzer (160) und dem ersten Lufterhitzer (150) zumindest ein Ventil (190) vorgesehen ist, mit welchem der Austrittsluftstrom des zweiten Lufterhitzers (160) ableitbar ist.

5. Heißluftsiegeleinrichtung (100) nach einem der vorstehenden Ansprüche,
**dadurch gekennzeichnet, dass**
eine Leiteinrichtung vorgesehen ist, mit welcher der Austrittsluftstrom des zweiten Lufterhitzers (160) dessen Eintrittsöffnung (161) zuleitbar ist.

6. Verfahren zum Heißluftsiegeln von kunststoffhaltigem Verpackungsmaterial, mit einem ersten Lufterhitzer (150), dem über eine Eintrittsöffnung (151) ein Eintrittsluftstrom mit einer Eintrittstemperatur zugeführt wird und der eine Austrittsöffnung aufweist, durch die ein Austrittsluftstrom einer Austrittstemperatur in Richtung auf die zu versiegelnden Bestandteile des Verpackungsmaterial gegeben wird, wobei ein zweiter Lufterhitzer (160) vorgesehen ist, dessen Austrittsluftstrom dem ersten Lufterhitzer (150) als Eintrittsluftstrom zugeführt wird, wobei mit einer zwischen dem zweiten Lufterhitzer (160) und dem ersten Lufterhitzer (150) vorgesehenen Temperaturmesseinrichtung (171) die Eintrittstemperatur des ersten Lufterhitzers kontrolliert wird,
**dadurch gekennzeichnet,**
**dass** der Eintrittsluftstrom des ersten Lufterhitzers auf eine Eintrittstemperatur erwärmt wird, die zwischen der Umgebungstemperatur und der Temperatur liegt, mit der die Eintrittsöffnung (151) maximal belastet werden kann,
**dass** einer Steuereinrichtung (180) die Messwerte der Temperaturmesseinrichtung (171) zugeleitet werden und mit der Steuereinrichtung der zweite Lufterhitzer (160) derart angesteuert wird, **dass** der Austrittsluftstrom im Wesentlichen eine gewünschte Temperatur aufweist, wobei die gewünschte Temperatur im Bereich von 80 bis 100 %, vorzugsweise 90 bis 100 % der maximal möglichen Temperatur des Eintrittsluftstroms des ersten Lufterhitzers (150) liegt, wobei dieser Wert der Steuereinrichtung vorgegeben wird.

## Claims

1. A hot-air sealing device (100) for hot-air sealing plastic-containing packaging material, having a first air heater (150), to which an input air flow having an input temperature can be fed via an inlet opening (151) and which has an outlet opening 163), through which an output air flow having an output temperature can be discharged in the direction of the packaging material components to be sealed, wherein a second air heater (160) is provided, the output air flow of which has the input air flow of the first air heater (150), wherein between the second air heater (160) and the first air heater (150) at least one temperature measuring device (171) is provided,
**characterized in**
**that** the input air flow of the first air heater has an input temperature, which is between the ambient temperature and the temperature, to which the inlet opening can be maximally subjected,
**that** a control device (180) is provided, to which the measured value of the temperature measuring device (171) can be supplied and which controls the second air heater (160) in such a manner that the output air flow has substantially a desired temperature and
**that** the desired temperature is in the range of 80 to 100%, preferably 90 to 100% of the maximum possible temperature of the input air flow of the first air heater (150), wherein such a value of the control device can be predetermined.

2. A hot-air sealing device (100) according to Claim 1,
**characterized in that**
the first input air flow has an input temperature, which is between 50 and 500 °C, in particular, between 200 and 350 °C.

3. A hot-air sealing device (100) according to any one of the preceding claims,
**characterized in that**
between the second air heater (160) and the first air heater (150) a connecting piece (170) is arranged, which connects the outlet opening of the second air heater (160) to the inlet opening (151) of the first air heater (150).

4. A hot-air sealing device (100) according to any one of the preceding claims,
**characterized in that**
between the second air heater (160) and the first air heater (150) at least one valve (190) is provided, with which the output air flow of the second air heater (160) can be discharged.

5. A hot-air sealing device (100) according to any one of the preceding claims,
**characterized in that**
a conducting device is provided, with which the output air flow of the second air heater (160) can be supplied to its inlet opening (161).

6. A method for the hot-air sealing of plastic-containing packaging material, having a first air heater (150) to which an input air flow with an input temperature is supplied via an inlet opening (151) and which has an outlet opening, through which an output air flow of an output temperature can be discharged in the direction of the packaging material components to be sealed, wherein the second air heater (160) is provided, the output air flow of which is supplied to the first air heater (150) as input air flow, wherein with a temperature measuring device (171) provided between the second air heater (160) and the first air heater (150) the input temperature of the first air heater is controlled,
**characterized in**
**that** the input air flow of the first air heater is heated to an input temperature, which is between the ambient temperature and the temperature to which the inlet opening (151) can be maximally subjected,
**that** the measured values of the temperature measuring device (171) can be supplied to a control device (180) and with the control device the second air heater (160) is controlled in such a manner **that** the output air flow has substantially a desired temperature, wherein the desired temperature is in the range of 80 to 100%, preferably 90 to 100% of the maximum possible temperature of the input air flow of the first air heater (150), wherein said value of the control device is predetermined.

## Revendications

1. Dispositif de scellement à air chaud (100) pour le scellement par air chaud d'un matériau d'emballage contenant une matière plastique, avec un premier dispositif de chauffage d'air (150), dans lequel peut être introduit, par l'intermédiaire d'une ouverture d'entrée (151), un flux d'air d'entrée avec une température d'entrée et qui comprend une ouverture de sortie (163) à travers laquelle un flux d'air de sortie à une température de sortie peut être guidé en direction des parties à sceller du matériau d'emballage,
un deuxième dispositif de chauffage d'air (160) étant prévu, dont le flux d'air de sortie constitue le flux d'air d'entrée du premier dispositif de chauffage d'air (150), au moins un dispositif de mesure de température (171) étant prévu entre le deuxième dispositif de chauffage d'air (160) et le premier dispositif de chauffage d'air (150),
**caractérisé en ce que**
le flux d'air d'entrée du premier dispositif de chauffage d'air (150) présente une température d'entrée qui se trouve entre la température ambiante et la température maximale à laquelle l'ouverture d'entrée peut être sollicitée,
un dispositif de commande (180) est prévu, dans lequel peuvent être introduites les valeurs de mesure du dispositif de mesure de température (171) et qui contrôle le deuxième dispositif de chauffage d'air (160) de façon à ce que le flux d'air de sortie présente globalement une température souhaitée et
la température souhaitée se trouve dans un intervalle de 80 à 100 %, de préférence de 90 à 100 % de la température maximale possible du flux d'air d'entrée du premier dispositif de chauffage d'air (150), une telle valeur pouvant être prédéfinie dans le dispositif de commande.

2. Dispositif de scellement à air chaud (100) selon la revendication 1
**caractérisé en ce que**
le premier flux d'air d'entrée présente une température d'entrée qui se trouve entre 50 et 500 °C, de préférence entre 200 et 350 °C.

3. Dispositif de scellement à air chaud (100) selon l'une des revendications précédentes,
**caractérisé en ce que**
entre le deuxième dispositif de chauffage d'air (160) et le premier dispositif de chauffage d'air (150), est disposé un élément de liaison (170) qui relie l'ouverture de sortie du deuxième dispositif de chauffage d'air (160) avec l'ouverture d'entrée (151) du premier dispositif de chauffage d'air (150).

4. Dispositif de scellement à air chaud (100) selon l'une des revendications précédentes,
**caractérisé en ce que**
entre le deuxième dispositif de chauffage d'air (160) et le premier dispositif de chauffage d'air (150), est prévue au moins une soupape (190) permettant de dévier le flux d'air de sortie du deuxième dispositif de chauffage d'air (160).

5. Dispositif de scellement à air chaud (100) selon l'une des revendications précédentes,
**caractérisé en ce que**
un dispositif de guidage est prévu, qui permet d'introduire le flux d'air de sortie du deuxième dispositif de chauffage d'air (160) par son ouverture d'entrée (161).

6. Procédé de scellement à air chaud d'un matériau d'emballage contenant une matière plastique, avec un premier dispositif de chauffage d'air (150), dans lequel, par l'intermédiaire d'une ouverture d'entrée (151), un flux d'air d'entrée avec une température d'entrée est introduit, et qui comprend une ouverture de sortie, à travers laquelle un flux d'air de sortie à une température de sortie peut être guidé en direction des parties à sceller du matériau d'emballage, un deuxième dispositif de chauffage d'air (160) étant prévu, dont le flux d'air de sortie est introduit en tant que flux d'air d'entrée dans le premier dispositif de chauffage d'air (150), au moins un dispositif de mesure de température (171), prévu entre le deuxième dispositif de chauffage d'air (160) et le premier dispositif de chauffage d'air (150), permettant de contrôler la température d'entrée du premier dispositif de chauffage d'air,
**caractérisé en ce que**
le flux d'air d'entrée du premier dispositif de chauffage d'air est chauffé à une température d'entrée, qui se trouve entre la température ambiante et la température maximale à laquelle l'ouverture d'entrée (151) peut être sollicitée,
les valeurs de mesure du dispositif de mesure de température (171) sont introduites dans le dispositif de commande (180) et, avec le dispositif de commande, le deuxième dispositif de chauffage d'air (160) est contrôlé de façon à ce que le flux d'air de sortie présente globalement une température souhaitée, la température souhaitée se trouvant dans un intervalle de 80 à 100 %, de préférence de 90 à 100 % de la température maximale possible du flux d'air d'entrée du premier dispositif de chauffage d'air (150), cette valeur étant prédéfinie dans le dispositif de commande.
